(19)

Europäisches
Patentamt
European
Patent Office
Office européen
des brevets

(11)  EP 4 236 576 B1

(12)  **EUROPEAN PATENT SPECIFICATION**

(45) Date of publication and mention
of the grant of the patent:
**02.07.2025  Bulletin 2025/27**

(21) Application number: **20962046.7**

(22) Date of filing: **20.11.2020**

(51) International Patent Classification (IPC):
*H04W 74/0833* (2024.01)     *H04W 74/00* (2009.01)

(52) Cooperative Patent Classification (CPC):
**H04W 74/0833; H04W 74/006**

(86) International application number:
**PCT/CN2020/130670**

(87) International publication number:
**WO 2022/104755 (27.05.2022 Gazette 2022/21)**

(54) **RANDOM ACCESS METHOD, COMMUNICATION DEVICE AND STORAGE MEDIUM**

DIREKTZUGRIFFSVERFAHREN, KOMMUNIKATIONSVORRICHTUNG UND SPEICHERMEDIUM

PROCÉDÉ D'ACCÈS ALÉATOIRE, DISPOSITIF DE COMMUNICATION ET SUPPORT
D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.08.2023  Bulletin 2023/35**

(73) Proprietor: **GUANGDONG OPPO MOBILE
TELECOMMUNICATIONS
CORP., LTD.
Dongguan, Guangdong 523860 (CN)**

(72) Inventors:
• **ZUO, Zhisong
Dongguan, Guangdong 523860 (CN)**
• **XU, Weijie
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(56) References cited:
WO-A1-2019/076443     CN-A- 106 455 112
CN-A- 109 769 303     CN-A- 111 492 716
CN-A- 111 919 490     US-B2- 10 306 680

• ERICSSON: "Potential UE complexity reduction
features for RedCap", vol. RAN WG1, no. Online;
20201026 - 20201113, 1 November 2020
(2020-11-01), XP052350772, Retrieved from the
Internet <URL:https://ftp.3gpp.org/tsg_ran/
WG1_RL1/TSGR1_103-e/Docs/R1-2008837.zip
R1-2008837 Potential UE complexity reduction
features for RedCap.docx> [retrieved on
20201101]
• "3rd Generation Partnership Project; Technical
Specification Group Radio Access Network;
Study on support of reduced capability NR
devices (Release 17)", 19 November 2020
(2020-11-19), XP051955993, Retrieved from the
Internet <URL:https://ftp.3gpp.org/tsg_ran/
WG1_RL1/TSGR1_103-e/Inbox/R1-2009816.zip
R1-2009816 TR38875v010.docx> [retrieved on
20201119]

EP 4 236 576 B1

**Description**

TECHNICAL FIELD

The disclosure relates to the technical field of wireless communication, and in particular to a random access method, a communication device and a storage medium.

BACKGROUND

Signals involved in an initial random access procedure of a User Equipment (UE) are transmitted only once, and an initial channel also has no corresponding channel repetition timing mechanism. Therefore, how to optimize the initial random access procedure and improve the success rate of initial random access has always been the goal. Related arts can be found in ERICSSON: "Potential UE complexity reduction features for RedCap" (3GPP DRAFT R1-2008837) and "3rd Generation Partnership Project; Technical Specification Group Radio Access Network; Study on support of reduced capability NR devices (Release 17)" (3GPP DRAFT R1-2009816).

SUMMARY

The present invention is set out in the claims. The embodiments of the application provide a method for random access, a communication device and a storage medium, which may improve the success rate of initial random access.
In a first aspect, the embodiments of the application provide a random access method, according to claim 1 or 9.
In a second aspect, the embodiments of the application provide a communication device, according to claim 5 or 11.

BRIEF DESCRIPTION OF THE DRAWINGS

FIG. 1 is a schematic diagram of an initial random access procedure according to an embodiment of the disclosure.
FIG. 2 is a schematic diagram of repetitions of a flexible time slot structure according to an embodiment of the disclosure.
FIG. 3 is a schematic diagram of a composition structure of a communication system according to an embodiment of the disclosure.
FIG. 4 is a schematic diagram of an optional processing flow of a random access method according to an embodiment of the disclosure.
FIG. 5 is a schematic diagram of a timing of a random access method according to an embodiment of the disclosure.
FIG. 6 is a schematic diagram of an optional composition structure of a communication device according to an embodiment of the disclosure.
FIG. 7 is a schematic diagram of a hardware composition structure of a communication device according to an embodiment of the disclosure.

DETAILED DESCRIPTION

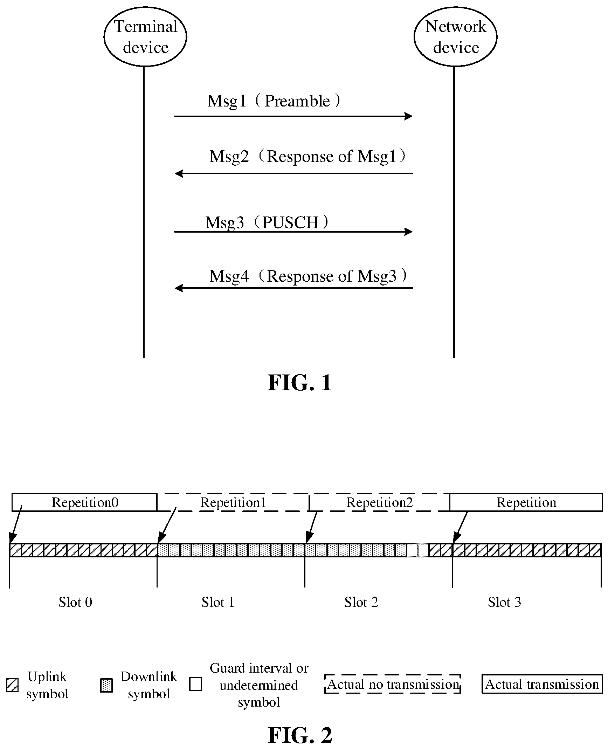

In order to provide a more detailed understanding of the features and technical contents of the embodiments of the disclosure, the implementation of the embodiments of the disclosure will be described in detail below with reference to the accompanying drawings, and the accompanying drawings are for illustrative purposes only and are not intended to limit the embodiments of the disclosure.
Before the description of the embodiments of the disclosure, the relevant contents are briefly described.
In a New Radio (NR) system, a processing capability of a terminal device must meet a processing capability of the maximum bandwidth at a frequency point where the terminal device is located. At frequency points below 2500MHz, the terminal device needs to support one transmitting antenna and two receiving antennas. At frequency points above 2500MHz, the terminal device needs to support four receiving antennas. With regard to a decoding capability of a control channel of the terminal device, for the frame structure with Subcarrier Spacing (SCS) being 15KHz and 30KHz, 56 Control Candidate Element (CCE) channel estimations are required within one slot; for the frame structure with an SCS being 60KHz, 48 CCE channel estimations are required within one slot; and for the frame structure with an SCS being 120KHz, 32 CCE channel estimations are required within one slot.
In the NR system, a schematic diagram of an initial random access procedure, as illustrated in FIG. 1, may include steps 1-4.

At step 1, the terminal device sends a Preamble to a network device through a message 1 (Msg1).

At step 2, the network device detects that the Preamble passes, and then the network device sends a Random Access Response (RAR) scrambled by using a Random Access-Radio Network Temporary Identifier (RA-RNTI) of an indicated UpLink (UL) grant to the terminal device through Message 2 (Msg2), the RAR includes a Random Access Preamble Identifier (RAPID).

At step 3, the terminal device with the RAPID sends Message 3 (Msg3) to the network device in the UL grant indicated by the network device. A plurality of terminal devices may send Msg3 in the UL grant indicated in the RAR by using the same resource and the same Demodulation Reference Signal (DMRS).

At step 4, the network device sends Message 4 (Msg4) to the terminal device.

In some embodiments, the network device parses out information of a terminal device, such as an identification code of the terminal device and Timing Advance (TA), according to received coincident channels sent by all the terminal devices. The network device sends feedback information to the terminal device, namely, Msg4. Conflict resolution may be completed through Msg4, thereby ending the random access procedure.

In the initial random access procedure shown in FIG. 1, a low-capability terminal device may have limited coverage during the access process. The low-capability terminal device may be a terminal device with a limited antenna capability, a terminal device with a limited bandwidth capability, or a terminal device with a limited data channel capability. For example, with regard to the limitation of the antenna capability of the terminal device, at the frequency points below 2500MHz, the terminal device needs to support one transmitting antenna and two receiving antennas, and if the terminal device actually supports one transmitting antenna and one receiving antenna, it is considered that the antenna capability of the terminal device is limited. With regard to the limitation of the data channel capability of the terminal device, for the frame structure with SCS being 120KHz, 32 CCE channel estimations are required within one slot, and if the terminal device actually performs 16 CCE channel estimations within one slot, it is considered that the data channel capability of the terminal device is limited.

The NR system may perform data transmission of aggregated multi-slot Physical Uplink Shared Channel (PUSCH) and Physical Downlink Shared Channel (PDSCH) through the uplink and downlink Aggregation factor. Through multi-slot data transmission, the coverage of single transmission of the NR system may be improved.

For a scenario in which a flexible slot structure is applied in conjunction with multi-slot data transmission, it is necessary to determine which symbols or slots may transmit the data of repetition. A schematic diagram of repetitions of a flexible time slot structure, as shown in FIG. 2, includes four repetitions, which are respectively Repetition0, Repetition1, Repetition2 and Repetition3. Repetition1 and Repetition2 actually have no data transmission, and Slot0 corresponding to Repetition0 and Repetition3 may only perform uplink transmission. A slot corresponding to Repetition1 may only perform downlink transmission. Nine symbols of a time slot corresponding to Repetition2 may only perform downlink transmission, two symbols of the time slot corresponding to Repetition2 may perform uplink transmission, and two symbols of the time slot corresponding to Repetition2 belong to undetermined symbols or guard intervals.

The number of repetitions is usually semi-statically configured, and the repeatedly transmission of PUSCH covers continuous slots. Therefore, when the available symbols in the time slot do not meet the requirements, for example, uplink repetition is required, the available symbols in the time slot may only perform downlink transmission and may not perform uplink transmission, the repetition of this slot is ignored, that is, the repetition is not performed on this slot.

In the NR system, the terminal device is usually forced to have four or two receiving antennas, and the terminal device with the limited capability, such as reduction of receiving antennas of the terminal device, or bandwidth reduction, may result in performance degradation of received signals and signal frequency diversity gain reduction, which may affect the success rate and robustness of initial access.

During the initial random access procedure, all the signals are transmitted once, so that the coverage performance is not guaranteed. A signal transmission parameter may also not be determined adaptively according to the actual situation, so that it is difficult to guarantee the coverage performance of the subsequent signal transmission. Furthermore, the initial random access channel has no channel repetition timing mechanism, which more easily leads to restart the random access procedure, and increases the delay and power consumption of the initial random access of the terminal device.

The technical solutions of the embodiments of the disclosure may be applied to various communication systems, for example, a Global System for Mobile Communications (GSM), a Code Division Multiple Access (CDMA) system, a Wideband Code Division Multiple Access (WCDMA) system, a General Packet Radio Service (GPRS) system, a Long Terminal Evolution (LTE) system, an LTE Frequency Division Duplex (FDD) system, an LTE Time Division Duplex (TDD) system, an Advanced LTE (LTE-A) system, an NR system, an evoluted system of the NR system, an LTE-based Access to Unlicensed Spectrum (LTE-U) system, aN NR-based Access to Unlicensed Spectrum (NR-U) system, a Universal Mobile Telecommunication System (UMTS), a Worldwide Interoperability for Microwave Access (WiMAX) communication system, Wireless Local Area Networks (WLAN), Wireless Fidelity (WiFi), a next-generation communication system, or other communication systems.

System architecture and service scenarios described in the embodiments of the disclosure are intended to describe the technical solutions in the embodiments of the disclosure more clearly, but are not intended to limit the technical solutions provided in the embodiments of the disclosure. Those of ordinary skill in the art may know that as the network architecture evolves and a new service scenario emerges, the technical solutions provided in the embodiments of the disclosure are also applicable to a similar technical problem.

The network device involved in the embodiments of the disclosure may be a common base station (such as NodeB (NB) or eNB or gNB), a NR controller, a centralized unit, a NR base station, a remote radio frequency module, a micro base station, a relay, a distributed unit, a Transmission Reception Point (TRP), a Transmission Point (TP) or any other devices. No limits are made to specific technologies and specific device forms adopted by the network device in the embodiments of the disclosure. In order to facilitate description, in all embodiments of the disclosure, the above apparatuses with a wireless communication function provided for the terminal device are collectively referred to a network device.

In the embodiments of the disclosure, the terminal device may be any terminal. For example, the terminal device may be UE in Machine Type Communication (MTC). That is to say, the terminal device may also be called the UE, a Mobile Station (MS), a mobile terminal, a terminal, etc. The terminal device may communicate with one or more core networks through a Radio Access Network (RAN). For example, the terminal device may be a mobile terminal (or referred to as a "cellular" phone) and a computer with a mobile terminal. For example, the terminal device may also be a portable, pocket-sized, hand-held, computer built-in, or in-vehicle mobile apparatus, which exchanges language and/or data with the RAN. There are no specific limits made thereto in the embodiments of the disclosure.

Optionally, the network device and the terminal device may be deployed on land, including indoors or outdoors, and may be held in hands or deployed in vehicles, or may be deployed on water, or may be deployed on an aircraft, a balloon, and an artificial satellite in the air. No limits are made to the application scenario of the network device and the terminal device in the embodiments of the disclosure.

Optionally, communication may be performed between the network device and the terminal device and between the terminal devices through a licensed spectrum, or through an unlicensed spectrum, or through the licensed spectrum and the unlicensed spectrum simultaneously. Communication between the network device and the terminal device and communication between the terminal devices may be performed through a spectrum below 7 Gigahertz (GHz), or through a spectrum above 7 GHz, or through the spectra below 7 GHz and above 7 GHz simultaneously. There are no limits made to the spectrum resource used between the network device and the terminal device in the embodiments of the disclosure.

Generally speaking, traditional communication systems support a limited number of connections and are easy to implement. However, with the development of the communication technology, mobile communication systems will not only support traditional communication, but also support, for example, Device to Device (D2D) communication, Machine to Machine (M2M) communication, MTC, and Vehicle to Vehicle (V2V) communication, etc. The embodiments of the disclosure may also be applied to these communication systems.

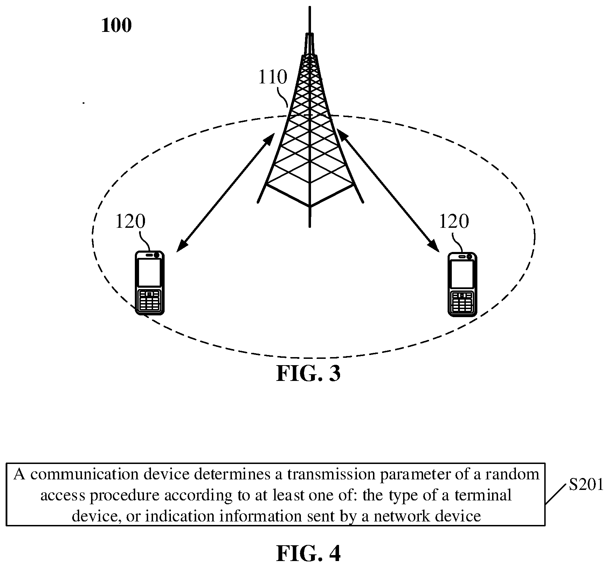

Exemplarily, a communication system 100 that the embodiments of the disclosure are applied to is shown in FIG. 3. The communication system 100 may include a network device 110, and the network device 110 may be a device communicating with a terminal device 120 (or called a communication terminal and a terminal). The network device 110 may provide communication coverage for a specific geographical region and may communicate with a terminal device located in the coverage. Optionally, the network device 110 may be a Base Transceiver Station (BTS) in the GSM or the CDMA system, may also be an NB in the WCDMA system, and may further be an Evolutional Node B (eNB or eNodeB) in the LTE system or a wireless controller in a Cloud Radio Access Network (CRAN). Or the network device may be a mobile switching center, a relay station, an access point, a vehicle device, a wearable device, a hub, a switch, a network bridge, a router, a network-side device in a 5G network, a network device in a future evolved Public Land Mobile Network (PLMN) or the like.

The communication system 100 further includes at least one terminal device 120 within the coverage of the network device 110. A "terminal device" used herein includes, but not limited to, a device configured to receive/send a communication signal through a wired line connection (for example, through Public Switched Telephone Network (PSTN), Digital Subscriber Line (DSL), digital cable and direct cable connections), and/or another data connection/network, and/or through a wireless interface (for example, for a cellular network, a WLAN (a digital television network like a Digital Video Broadcasting-Handheld (DVB-H) network, a satellite network and an Amplitude Modulated (AM)-Frequency Modulated (FM) broadcast transmitter)), and/or devices, configured to receive/send a communication signal, of another communication terminal, and/or an Internet of Things (IoT) device. The terminal device configured to communicate through a wireless interface may be referred to as a "wireless communication terminal", a "wireless terminal" or a "mobile terminal". Examples of a mobile terminal include, but not limited to, a satellite or cellular telephone, a Personal Communication System (PCS) terminal capable of combining a cellular radio telephone and data processing, faxing and data communication capabilities, a Personal Digital Assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal device may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal device in the 5G network, a terminal device in the future evolved PLMN or the like.

Optionally, the terminal device 120 may perform D2D communication.

Optionally, the 5G system or the 5G network may also be referred to as an NR system or an NR network.

A network device and two terminal devices are exemplarily shown in FIG. 3. Optionally, the communication system 100 may include a plurality of network devices and another number of terminal devices may be included in coverage of each network device. There are no limits made thereto in the embodiments of the disclosure.

Optionally, the communication system 100 may further include another network entity such as a network controller and a mobility management entity. There are no limits made thereto in the embodiments of the disclosure.

It is to be understood that a device with a communication function in the network/system in the embodiments of the disclosure may be referred to as a communication device. For example, for the communication system 100 shown in FIG. 3, communication devices may include the network device 110 and terminal device 120 with the communication function, and the network device 110 and the terminal device 120 may be the specific devices mentioned above and will not be elaborated herein. The communication devices may further include other devices in the communication system 100, for example, other network entities like a network controller and a mobility management entity. There are no limits made thereto in the embodiments of the disclosure.

A processing flow of an initial random access method according to an embodiment of the disclosure, as shown in FIG. 4, includes the step S201.

At S201, a communication device determines a transmission parameter of a random access procedure according to the type of a terminal device and indication information sent by a network device.

The communication device includes the terminal device and/or the network device. Therefore, the disclosure is that: the terminal device determines the transmission parameter of the random access procedure according to the type of the terminal device and the indication information sent by the network device. Alternatively, the disclosure is that: the network device determines the transmission parameter of the random access procedure according to the type of the terminal device and the indication information sent by the network device. Alternatively, the embodiments of the disclosure may be that: both the network device and the terminal device determine the transmission parameter of the random access procedure according to the type of the terminal device and the indication information sent by the network device.

The communication device may determine the random parameter of the random access procedure according to the type of the terminal device. Herein, there is a correspondence between the type of the terminal device and a resource used by the terminal device to send Msg1. Different correspondences are illustrated below.

With regard to a non-claimed correspondence between the type of the terminal device and the capability of the terminal device, the capability of the terminal device may include at least one of: an antenna capability of the terminal device, a bandwidth capability of the terminal device, or a data channel capability of the terminal device. If the terminal device does not have at least one of the antenna capability, the bandwidth capability, or the data channel capability, the type of the terminal device is a terminal device with the limited capability. If the terminal device has at least one of the antenna capability, the bandwidth capability, or the data channel capability, the type of terminal device is a terminal device with the unlimited capability. Herein, the antenna capability of the terminal device may be whether the number of receiving antennas and the number of transmitting antennas of the terminal device satisfy the requirements of corresponding communication frequency points. If the number of receiving antennas and the number of transmitting antennas of the terminal device satisfy the requirements of the corresponding communication frequency points, it indicates that the terminal device has the antenna capability. If the number of receiving antennas and the number of transmitting antennas of the terminal device do not satisfy the requirements of the corresponding communication frequency points, it indicates that the terminal device has no antenna capability.

For example, at the frequency points below 2500MHz, a terminal device of NR needs to have one transmitting antenna and two receiving antennas. However, when the terminal device actually has one transmitting antenna and one receiving antenna, it indicates that the terminal device has no antenna capability or the antenna capability of the terminal device is limited. If the terminal device actually has one transmitting antenna and two receiving antennas, it indicates that the terminal device has the antenna capability.

Taking the transmission parameter being an aggregation factor of a Physical Downlink Control Channel (PDCCH) carrying Msg2 as an example, if the terminal device has one receiving antennas, the aggregation factor of the PDCCH carrying Msg2 may be 16. If the terminal device has two receiving antenna, the aggregation factor of the PDCCH carrying Msg2 may be 8. That is, the antenna capability of the terminal device and the aggregation factor of the PDCCH carrying Msg2 may be inversely proportional, and the inverse proportional relationship between the antenna capability of the terminal device and the aggregation factor of the PDCCH carrying Msg2 may be determined on the basis of a linear function or a non-linear function. The stronger the antenna capability of the terminal device, the smaller the aggregation factor of the PDCCH carrying Msg2. The strong antenna capability of the terminal device may be that the terminal device has a large number of transmitting antennas and/or receiving antennas. The above is only described by taking the aggregation factor of the PDCCH carrying Msg2 as an example, and in specific implementation, the antenna capability of the terminal device may also be inversely proportional to an aggregation factor of a PDCCH carrying Msg4.

Therefore, it may be determined whether the terminal device is a terminal device with the limited capability according to the capability of the terminal device, and then the transmission parameter of the random access procedure is determined according to whether the terminal device is the terminal device with the limited capability.

With regard to a correspondence between the type of the terminal device and the resource used by the terminal device to send Msg1, the type of the terminal device may include the terminal device with the limited capability and the terminal device with the unlimited capability. The terminal device with the limited capability sends Msg1 by using a first resource, and the terminal device with the unlimited capability sends Msg1 by using a second resource. Herein, the terminal with the unlimited capability may be a terminal satisfying the communication requirements, for example, at the frequency points below 2500MHz, the terminal device of NR needs to have one transmitting antenna and two receiving antennas. If the terminal device actually has one transmitting antenna and two receiving antennas, it is considered that the capability of the terminal device is unlimited. The terminal with the limited capability may be a terminal which does not satisfy the communication requirements, for example, at the frequency points below 2500MHz, the terminal device of NR needs to have one transmitting antenna and two receiving antennas. If the terminal device actually has one transmitting antenna and one receiving antenna, it is considered that the capability of the terminal device is limited. The second resource may be a resource reserved for the RACH, or a reserved resource of the RACH, or an RACH resource corresponding to the reserved RACH ID, and is a resource for the terminal device with the unlimited capability to send Msg1. The first resource may be a specific resource for the terminal device with the limited capability to send Msg1. The first resource may be indicated by a frequency domain and/or time domain offset with respect to the second resource. For example, if the second resource is offset by X Resource Blocks (RBs) or by Y slots with respect to the first resource, it is considered that the first resource is a resource for the terminal device with the limited capability to send Msg1.

Therefore, it may be determined whether the terminal device is the terminal device with the limited capability according to the resource for the terminal device to send Msg1, and then the transmission parameter of the random access procedure is determined according to whether the terminal device is the terminal device with the limited capability.

With regard to a non-claimed correspondence between the type of the terminal device and the RACH ID for the terminal device to initiate random access, it may be determined whether the RACH is a reserved channel resource for random access according to the RACH ID for the terminal device to initiate random access. If the RACH is a channel resource reserved for random access, it indicates that the terminal device is the terminal device with the unlimited capability. If the RACH is not the channel resource reserved for random access, it indicates that the terminal device is the terminal device with the limited capability.

Therefore, according to the RACH ID for the terminal device to initiate random access, it may be determined whether the terminal device is a terminal device with the limited capability, and then the transmission parameter of the random access procedure is determined according to whether the terminal device is the terminal device with the limited capability.

The transmission parameter of the random access procedure is determined according to the indication information sent by the network device.

The indication information may be carried in Downlink Control Information (DCI). The DCI may be scrambled by an RA-RNTI, or the DCI may be scrambled by a type 2 (Msg-B) random access RNTI, or the DCI may be scrambled by using a manner other than the above two scrambling manners.

The DCI may be DCI scheduled by a PDCCH carrying Msg2.

Bit information corresponding to reserved bits in the DCI is used for indicating the transmission parameter of the random access procedure. That is, the reserved bits in the DCI are used for indicating the transmission parameter of the random access procedure.

The indication information is used for indicating a transmission parameter of a channel after transmitting the indication information during the random access procedure. For example, if the indication information is carried in the DCI scheduled by the PDCCH carrying Msg2, the indication information is used for indicating a transmission parameter after Msg2, such as a transmission parameter of Msg3 and/or Msg4, or a transmission parameter of a channel carrying Msg3 and/or Msg4.

The network device may determine the transmission parameter of the random access procedure according to the type of the terminal device, and then indicate the transmission parameter of the random access procedure to the terminal device through the indication information.

A schematic diagram of the indication information of the DCI is shown in the following Table 1. the transmission parameter of the random access process may be indicated by using N bits of the reserved bits according to assigned domain information in Table 1, where a value of N may be the number of remaining bits after the number of assigned bits. For example, if 14 bits remain, 14 bits are used to indicate the transmission parameter of the random access procedure. If 16 bits remain, 16 bits are used to indicate the transmission parameter of the random access procedure.

Table 1

| Domain | Definition |
|---|---|
| -Frequency domain resource assignment | $-\left\lceil \log_2(N_{RB}^{DL,BWP}(N_{RB}^{DL,BWP}+1)/2)\right\rceil$ bits $N_{RB}^{DL,BWP}$ is equal to the size of CORESET 0, if CORESET 0 has high-level configuration, $N_{RB}^{DL,BWP}$ is equal to an initial downlink BWP if CORESET 0 is not configured |
| -Time domain resource assignment | -4 bits |
| -VRB-to-PRB mapping | -1 bit, representing discrete or continuous PRB mappings |
| -Modulation and coding scheme | -5 bits modulation order |
| -TB scaling | -2 bits data block scaling factor |
| -LSBs of SFN | -2 bits, configured for MsgB-RNTI and RA-RNTI under shared spectrum 0 bit, configured for other cases |
| -Reserved bits | -14 bits or 16 bits, which are bits |
| | remaining according to the above assignment |

The transmission parameter of the random access procedure is determined according to the type of terminal device and the indication information sent by the network device. That is, the communication device determines the transmission parameter of the random access procedure in combination with the type of the terminal device and the indication information sent by the network device.

For example, the terminal device determines the transmission parameter of Msg2 in the random access procedure according to the type of the terminal device. The network device schedules the DCI by using the PDCCH carrying Msg2, and the DCI indicates the transmission parameter for transmitting Msg3 and/or Msg4, and then the terminal device determines the transmission parameter of Msg3 and/or Msg4 according to the indication of the DCI. The transmission parameter of Msg4 indicated by the DCI may be determined by the network device according to the type of the terminal device.

For another example, the terminal device determines the transmission parameter of Msg2 in the random access procedure according to the type of the terminal device. The network device schedules the DCI by using the PDCCH carrying Msg2, the DCI indicates the transmission parameter for transmitting Msg3 and/or Msg4, and then the terminal device determines the transmission parameter of Msg3 and/or Msg4 according to the indication of the DCI, or the terminal device determines the transmission parameter for transmitting Msg3 according to the type of the terminal device. The transmission parameter of Msg4 indicated by the DCI may be determined by the network device according to the type of the terminal device.

An implementation process of determining, by the communication device, the transmission parameter of the random access procedure is described above, and the transmission parameter of the random access procedure is described below.

The transmission parameter of the random access procedure includes a transmission parameter of Msg. 3 and in non-claimed options a transmission parameter of Msg. 2 or Msg. 4 or combinations of them. Msg2, Msg3 and Msg4 are messages transmitted during the random access procedure.

A transmission parameter of Msg2 may include at least one of: an aggregation factor of the PDCCH carrying Msg2, an aggregation factor of the PDSCH scheduled by Msg2, a frequency hopping manner of Msg2, a modulation parameter of Msg2, a resource parameter of Msg2, an aggregation factor of a Physical Uplink Control Channel (PUCCH) corresponding to Msg2, a frequency hopping manner of the PUCCH corresponding to Msg2, a modulation parameter of the PUCCH corresponding to Msg2, or a resource parameter of the PUCCH corresponding to Msg2. The PUCCH corresponding to Msg2 may refer to a PUCCH scheduled by the PDCCH carrying Msg2.

The aggregation factor of the PDCCH carrying Msg2 is the number of time domain units for sending control information of Msg2. Herein, the time domain unit may include any one of: a frame, a subframe, a slot, or a symbol. The number of time domain units may be 1 slot, 2 slots, 4 slots, 8 slots or 16 slots. For example, Msg2 includes control information and data information. If the number of time domain units for sending the control information of Msg2 is 4 slots, the aggregation factor of the PDCCH carrying Msg2 is 4. That is, Msg2 may be repeatedly transmitted for 4 times, or the PDCCH carrying Msg2 may be repeatedly transmitted for 4 times.

Time domain resource of the last PDCCH of repeated transmission and the time domain resource of the first PDCCH repeated transmission are determined by a time offset in the indication information scheduled by the PDCCH carrying Msg2. The time offset may be in units of any one of a frame, a subframe, a slot, or a symbol. For example, if the aggregation factor of the PDCCH carrying Msg2 is N, the PDCCH carrying Msg2 may be repeatedly transmitted for N times, and if the number of repetition i=0, it indicates the first repetition. If the number of repetitions i=1, it indicates the second repetition. By analogy, if the number of repetitions i=N-1, it indicates the Nth repetition. Alternatively, if the aggregation factor of the PDCCH carrying Msg2 is N, the PDCCH carrying Msg2 may be repeatedly transmitted for N-1 times, and the first transmission corresponds to N=0. If the number of repetitions i=1, it corresponds to the first repetition. If the number of repetitions i=2, it corresponds to the second repetition. By analogy, if the number of repetitions i=N, it corresponds to the Nth repetition.

If the indication information scheduled by the PDCCH, transmitted for the first time, carrying Msg2 includes a time offset of k slots, the time domain resource of the first PDCCH of repeated transmission may be located in an adjacent slot after the slot of PDCCH transmitted for the first time. The time domain resource of the last PDCCH of repeated transmission and the first PDCCH of repeated transmission may differ by k slots.

The aggregation factor of the PDSCH carrying Msg2 is the number of time domain units for sending the data information of Msg2. The time domain unit may include any one of: a frame, a subframe, a time slot, or a symbol. For example, Msg2 includes control information and data information. If the number of time domain units of the data information in Msg2 is 8 slots, the aggregation factor of the PDSCH carrying Msg2 is 8. That is, Msg2 may be repeatedly transmitted for 8 times, or the PDSCH carrying Msg2 may be repeatedly transmitted for 8 times.

The time domain resource of the PDSCH scheduled by the PDCCH carrying Msg2 is located in the first slot after all PDCCHs, carrying Msg2, of the repeated transmission. That is, the time domain resource of the PDSCH scheduled by the PDCCH carrying Msg2 is in the first slot after the last PDCCH, carrying Msg2, of the repeated transmission. For example, the 4 repetitions are performed for the PDCCH carrying Msg2, the last repetition of the PDCCH carrying Msg2 is performed in the slot 6, and then the PDSCH scheduled by the PDCCH carrying Msg2 is transmitted in the slot 7.

By determining the number of repetitions and the repetition timings of the PDCCH carrying Msg2 and the PDSCH, the complexity of receiving signals by the terminal device is reduced, and the success rate of random access is improved.

The modulation parameter may include at least one of: a modulation multi-access mode or a modulation order limit. Accordingly, the modulation parameter of the PUCCH corresponding to Msg2 may include at least one of: a modulation multi-access mode of the PUCCH corresponding to Msg2, or a modulation order limit of the PUCCH corresponding to Msg2.

The resource parameter may include at least one of: a time domain parameter of the resource or a frequency domain parameter of the resource. Accordingly, the resource parameter of the PUCCH corresponding to Msg2 may include at least one of: a time domain parameter of the PUCCH corresponding to Msg2, or frequency domain parameter of the PUCCH corresponding to Msg2.

The frequency hopping manner may include a frequency domain position of frequency hopping. Herein, the frequency domain position of frequency hopping may include at least one of: an RB index of frequency hopping or an offset of frequency hopping. Accordingly, the frequency hopping manner of Msg2 may include a frequency domain position of frequency hopping of Msg2. The frequency domain position of frequency hopping of Msg2 may be determined through an RB index of frequency hopping of Msg2 and/or an offset of frequency hopping. The frequency hopping manner of the PUCCH corresponding to Msg2 may include a frequency domain position of frequency hopping of the PUCCH corresponding to Msg2. The frequency domain position of frequency hopping of the PUCCH corresponding to Msg2 may be determined through an RB index of frequency hopping of the PUCCH corresponding to Msg2 and/or an offset of frequency hopping.

A transmission parameter of Msg4 may include at least one of: an aggregation factor of the PDCCH carrying Msg4, an aggregation factor of the PDSCH scheduled by Msg4, a frequency hopping manner of Msg4, a modulation parameter of Msg4, a resource parameter of Msg4, an aggregation factor of a PUCCH corresponding to Msg4, a frequency hopping manner of the PUCCH corresponding to Msg4, a modulation parameter of the PUCCH corresponding to Msg4, or a resource parameter of the PUCCH corresponding to Msg4.

The aggregation factor of the PDCCH carrying Msg4 is the number of time domain units for sending data information of Msg4. Herein, the time domain unit may include any one of: a frame, a subframe, a slot, or a symbol. The number of time domain units may be 1 slot, 2 slots, 4 slots, 8 slots or 16 slots. For example, Msg4 includes control information and data information. If the number of time domain units of the data information of Msg4 is 4 slots, the aggregation factor of the PDCCH carrying Msg4 is 4. That is, Msg4 may be repeatedly transmitted for 4 times, or the PDCCH carrying Msg4 may be repeatedly transmitted for 4 times.

The time domain resource of the last PDCCH of repeated transmission and the time domain resource of the first PDCCH of repeated transmission are determined by a time offset in the indication information scheduled by the PDCCH carrying Msg4. The time offset may be in units of any one of a frame, a subframe, a slot, or a symbol. For example, if the aggregation factor of the PDCCH carrying Msg4 is N, the PDCCH carrying Msg4 may be repeatedly transmitted for N times, and if the number of repetitions i=0, it indicates the first repetition. If the number of repetitions i=1, it indicates the second repetition. By analogy, if the number of repetitions i=N-1, it indicates the Nth repetition. Alternatively, if the aggregation factor of the PDCCH carrying Msg4 is N, the PDCCH carrying Msg4 may be repeatedly transmitted for N-1 times, and the first transmission corresponds to N=0. If the number of repetitions i=1, it corresponds to the first repetition. If the number of repetitions i=2, it corresponds to the second repetition. By analogy, if the number of repetitions i=N, it corresponds to the Nth repetition.

If the indication information scheduled by the PDCCH, transmitted for the first time, carrying Msg4 includes a time offset of k time slots, the time domain resource of the first PDCCH, carrying Msg4, of repeated transmission may be located in an adjacent time slot after the time slot of the PDCCH transmitted for the first time. The time domain resources of the last PDCCH, carrying Msg4, of repeated transmission and the first PDCCH, carrying Msg4, of repeated transmission may differ by k slots.

The aggregation factor of the PDSCH carrying Msg4 is the number of time domain units for sending data information of Msg4. The time domain unit may include any one of: a frame, a subframe, a slot, or a symbol. For example, Msg4 includes control information and data information. If the number of time domain units for sending the data information of Msg4 is 8 slots, the aggregation factor of the PDSCH carrying Msg4 is 8. That is, Msg4 may be repeatedly transmitted for 8 times, or the PDSCH carrying Msg4 may be repeatedly transmitted for 8 times.

The time domain resource of the PDSCH scheduled by the PDCCH carrying Msg4 is located at the first slot after all PDCCHs of repeated transmission. That is, the time domain resource of the PDSCH scheduled by the PDCCH carrying Msg4 is the first time slot after the last PDCCH of repeated transmission. For example, 8 repetitions are performed for the PDCCH carrying Msg4, the last repetition of the PDCCH carrying Msg4 is performed in slot 7, and then the PDSCH scheduled by the PDCCH carrying Msg4 is transmitted in slot 8.

By determining the number of repetitions and the repetition timings of the PDCCH carrying Msg4 and the PDSCH, the complexity of receiving signals by the terminal device is reduced, and the success rate of random access is improved.

The modulation parameter may include at least one of: a modulation multi-access mode, or a modulation order limit. Accordingly, the modulation parameter of the PUCCH corresponding to Msg4 may include at least one of: a modulation multi-access mode of the PUCCH corresponding to Msg4, or a modulation order limit of the PUCCH corresponding to Msg4.

The resource parameter may include at least one of: a time domain parameter of the resource or a frequency domain parameter of the resource. In some embodiments, the resource parameter may include at least one of: a time domain parameter of the resource of the PUCCH corresponding to Msg4 or a frequency domain parameter of the PUCCH corresponding to Msg4.

The frequency hopping manner may include a frequency domain position of frequency hopping. Herein, the frequency domain position of frequency hopping may include at least one of: an RB index of frequency hopping or an offset of frequency hopping. Accordingly, the frequency hopping manner of Msg4 may include a frequency domain position of frequency hopping of Msg4. The frequency domain position of frequency hopping of Msg4 may be determined through an RB index of frequency hopping of Msg4 and/or an offset of frequency hopping. The frequency hopping manner of the PUCCH corresponding to Msg4 may include a frequency domain position of frequency hopping of the PUCCH corresponding to Msg4. The frequency domain position of frequency hopping of the PUCCH corresponding to Msg4 may be determined through an RB index of frequency hopping of the PUCCH corresponding to Msg4 and/or an offset of frequency hopping.

The transmission parameter of Msg3 includes an aggregation factor of the PUSCH carrying Msg3, and a modulation parameter of Msg. 3 and optinally, not-claimed, a frequency hopping manner of Msg. 3. Herein, the aggregation factor of the PUSCH carrying Msg3 is the number of time domain units for sending Msg3. Herein, the time domain unit may include any one of: a frame, a subframe, a slot, or a symbol. The number of time domain units may be 1 slot, 2 slots, 4 slots, 8 slots or 16 slots. For example, if the number of time domain units for sending Msg3 is 8 slots, the aggregation factor of the PUSCH carrying Msg3 is 8, and the PUSCH carrying Msg3 may be repeatedly transmitted for 8 times.

The modulation parameter may include at least one of: a modulation multi-access mode or a modulation order limit. Accordingly, the modulation parameter of Msg3 may include at least one of: a modulation multi-access mode of Msg3, or a modulation order limit of Msg3.

The resource parameter may include at least one of: a time domain parameter of the resource or a frequency domain parameter of the resource. Accordingly, the resource parameter may include at least one of: a time domain parameter of Msg3, or a frequency domain parameter of Msg3.

The frequency hopping manner may include a frequency domain position of frequency hopping. Herein, the frequency domain position of frequency hopping may include at least one of: an RB index of frequency hopping, or an offset of frequency hopping. Accordingly, the frequency hopping manner of Msg3 may include a frequency domain position of frequency hopping of Msg3. The frequency domain position of frequency hopping of Msg3 may be determined through an RB index of frequency hopping of Msg3 and/or an offset of frequency hopping.

According to the random access method provided by the embodiments of the disclosure, the network device and/or the terminal device may determine at least one of the transmission parameter of Msg2, not-claimed, the transmission parameter of Msg3, claimed, or the transmission parameter of Msg4, not-claimed, in the random access procedure according to at least one of the type of the terminal device, the indication information of the network device, the capability of the terminal device, the RACH ID for the terminal device to initiate random access, or the resource used by the terminal device to send Msg1. In this way, the transmission parameter in the random access procedure may be adaptively configured according to the transmission parameter in the random access procedure, which improves the coverage performance of signal transmission in the random access procedure and the success rate of random access. In the embodiment of the disclosure, by determining the number of repetitions and the repetition timings of the PDCCH carrying Msg2 and the PDSCH, and determining the number of repetitions and the repetition timings of the PDCCH carrying Msg4 and the PDSCH, the success rate of random access is further improved.

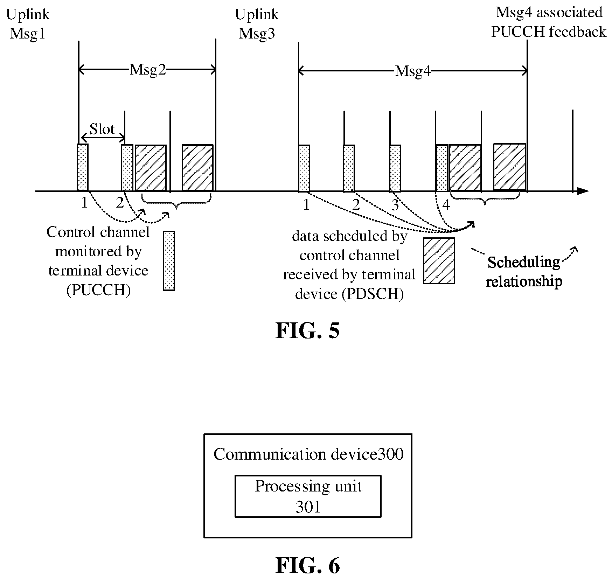

A schematic diagram of a timing of a random access method according to an embodiment of the disclosure may be as shown in FIG. 5, the PDCCH carrying Msg2 includes 2 times of transmission, and the PDSCH scheduled by the PDCCH carrying Msg2 also includes 2 times of transmission. The PDCCH carrying Msg4 includes 4 times of transmission, and the PDSCH scheduled by the PDCCH carrying Msg4 includes 2 times of transmission.

In order to implement the random access method, the embodiments of the disclosure also provide a communication device. An optional composition structure of the communication device 300, shown in FIG. 6, includes a processing unit 301.

The processing unit 301 is configured to determine a transmission parameter of a random access procedure according to the type of a terminal device, and indication information sent by a network device.

The transmission parameter of the random access procedure includes a transmission parameter of Msg3.

The transmission parameter of Msg2, in a non-claimed option, includes at least one of the following:
an aggregation factor of a PDCCH carrying Msg2, an aggregation factor of a PDSCH scheduled by Msg2, a frequency hopping manner of Msg2, a modulation parameter of Msg2, a resource parameter of Msg2, an aggregation factor of a PUCCH corresponding to Msg2, a frequency hopping manner of the PUCCH corresponding to Msg2, a modulation parameter of the PUCCH corresponding to Msg2, or a resource parameter of the PUCCH corresponding to Msg2.

The aggregation factor of the PDCCH carrying Msg2 is the number of time domain units for sending control information of Msg2.

The aggregation factor of the PDSCH carrying Msg2 is the number of time domain units for sending data information of Msg2.

Time domain resource of the last PDCCH of repeated transmission and the time domain resource of the first PDCCH of repeated transmission are determined by a time offset in the indication information scheduled by the PDCCH carrying Msg2.

The time domain resource of the PDSCH scheduled by the PDCCH carrying Msg2 is located at the first slot after all PDCCHs of repeated transmission.

The transmission parameter of Msg4, in a non-claimed option, includes at least one of the following:
an aggregation factor of the PDCCH carrying Msg4, an aggregation factor of the PDSCH scheduled by Msg4, a frequency hopping manner of Msg4, a modulation parameter of Msg4, a resource parameter of Msg4, an aggregation factor of a PUCCH corresponding to Msg4, a frequency hopping manner of the PUCCH corresponding to Msg4, a modulation parameter of the PUCCH corresponding to Msg4, or a resource parameter of the PUCCH corresponding to Msg4.

The aggregation factor of the PDCCH carrying Msg4 is the number of time domain units for sending control information of Msg4.

The aggregation factor of the PDSCH carrying Msg4 is the number of time domain units for sending data information of Msg4.

The time domain resource of the last PDCCH of repeated transmission and the time domain resource of the first PDCCH of repeated transmission are determined through a time offset in the indication information scheduled by the PDCCH carrying Msg4.

The time domain resource of the PDSCH scheduled by the PDCCH carrying Msg4 is located at the first slot after all PDSCHs of repeated transmission.

The transmission parameter of Msg3 includes at least one of the following:
an aggregation factor of the PUSCH carrying Msg3, a frequency hopping manner of Msg3, a modulation parameter of Msg3, or a resource parameter of Msg3.

The aggregation factor of the PUSCH carrying Msg3 is the number of time domain units for sending Msg3.

The time domain unit includes any one of the following: a frame, a subframe, a slot, or a symbol.

The modulation parameter includes: a modulation multi-access mode and/or a modulation order limit.

The resource parameter includes: a time domain parameter of the resource and/or a frequency domain parameter of the resource.

The frequency hopping manner includes a frequency domain position of frequency hopping.

The frequency domain position of frequency hopping is determined by an RB index of frequency hopping and/or an offset of frequency hopping.

There is a correspondence between the type of the terminal device and at least one of: a capability of the terminal device, an RACH ID for the terminal device to initiate random access, or a resource used by the terminal device to send Msg1.

The capability of the terminal device includes at least one of the following:

an antenna capability of the terminal device, a bandwidth capability of the terminal device, or a data channel capability of the terminal device.

The resource used by the terminal device to send Msg1 includes a reserved resource of an RACH or an RACH resource corresponding to a reserved RACH ID.

The indication information is carried in DCI.

The DCI is scrambled by an RA-RNTI, or the DCI may be scrambled by a type 2 random access RNTI.

Bit information corresponding to reserved bits in the DCI is used for indicating the transmission parameter of the random access procedure.

The indication information is used for indicating a transmission parameter of a channel after transmitting the indication information during the random access procedure.

The communication device includes: the network device and/or the terminal device.

The communication device may further include a sending unit and/or a receiving unit. If the communication device is the network device, the sending unit is configured to send Msg2 and/or Msg4, and the receiving unit is configured to receive Msg1 and/or Msg3. If the communication device is the terminal device, the sending unit is configured to send Msg1 and/or Msg3, and the receiving unit is configured to receive Msg2 and/or Msg4.

The functions of the processing unit may be implemented by a processor in the communication device, the functions of the sending unit may be implemented by a transmitter in the communication device, and the functions of the receiving unit may be implemented by a receiver in the communication device.

The embodiments of the disclosure also provide a communication device, which includes a processor and a memory configured to store a computer program runnable on the processor, and the processor is configured to run the computer program to enable the communication device to execute the steps of the above random access method.

The embodiments of the disclosure also provide a chip, which includes a processor, configured to call and run a computer program from a memory to enable the communication device installed with the chip to execute the above random access method.

The embodiments of the disclosure also provide a storage medium, storing an executable program. The executable program implements the above random access method when being executed by a processor.

The embodiments of the disclosure also provide a computer program product, which includes a computer program instruction. The computer program instruction enables a computer to execute the above random access method.

The embodiments of the disclosure also provide a computer program. The computer program enables a computer to execute the above random access method.

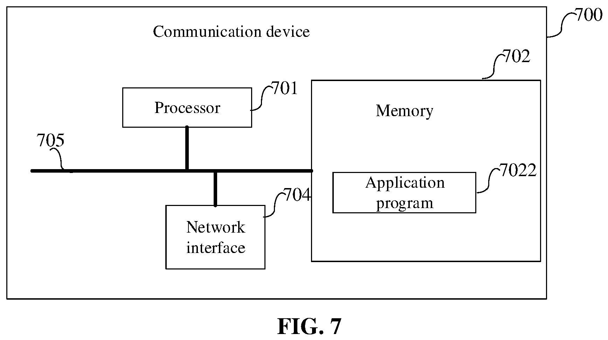

FIG. 7 is a schematic diagram of a hardware composition structure of a communication device according to an embodiment of the disclosure. The communication device 700 includes: at least one processor 701, a memory 702 and at least one network interface 704. Various components of the communication device 700 are coupled together through a bus system 705. It is to be understood that the bus system 705 is configured to implement connection and communication between these components. In addition to a data bus, the bus system 705 further includes a power bus, a control bus, and a status signal bus. However, for clarity of description, various buses are marked as the bus system 705 in FIG. 7.

It is to be understood that the memory 702 may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM), a Ferromagnetic Random Access Memory (FRAM), a Flash Memory, a magnetic surface memory, an optical disk or a Compact Disc Read-Only Memory (CD-ROM); and the magnetic surface memory may be a magnetic disk memory or a magnetic tape memory. The volatile memory may be a Random Access Memory (RAM) that acts as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DRRAM). The memory 702 described in the embodiment of the present is intended to include, but is not limited to, these and any other suitable types of memories.

The memory 702 in the embodiments of the disclosure is configured to store various types of data to support operation of the communication device 700. Examples of such data include: any computer application operated on the communication device 700, such as an application program 7022. A program for implementing the method in the embodiment of the disclosure may be included in the application program 7022.

The method disclosed in the above embodiment of the disclosure may be applied to the processor 701, or may be implemented by the processor 701. The processor 701 may be an integrated circuit chip with signal processing capability. During implementation, the steps of the above method may be completed by hardware integrated logic circuits in the processor 701 or instructions in the form of software. The above processor 701 may be a general-purpose processor, a Digital Signal Processor (DSP), or other programmable logic devices, discrete gate or transistor logic devices, discrete hardware components, or the like. The processor 701 may implement or perform various methods, steps, and logical block diagrams disclosed in the embodiments of the disclosure. The general-purpose processor may be a microprocessor, or any conventional processor. Steps of the methods disclosed with reference to the embodiments of the disclosure may be directly performed and accomplished by a hardware decoding processor, or may be performed and accomplished by a combination of hardware and software modules in the decoding processor. A software module may be located in a storage medium. The storage medium is located in the memory 702, and the processor 701 reads information in the memory 702 and completes the steps of the above method in combination with hardware thereof.

In an exemplary embodiment, the electronic device 700 may be implemented by one or more Application Specific Integrated Circuits (ASICs), DSPs, Programmable Logic Devices (PLDs), Complex Programmable Logic Devices (CPLDs), Field Programmable Gate Arrays (FPGAs), general-purpose processors, controllers, Micro Controller Units (MCUs), Micro Processor Units (MPU)s, or other electronic elements for executing the above methods.

The disclosure is described with reference to flowcharts and/or block diagrams of the method, the device (system) and the computer program product according to the embodiments of the disclosure. It is to be understood that each flow and/or block in the flowcharts and/or the block diagrams and a combination of the flows and/or the blocks in the flowcharts and/or the block diagrams may be implemented by computer program instructions. These computer program instructions may be provided for a general-purpose computer, a dedicated computer, an embedded processor or processors of other programmable data processing devices to generate a machine, so that an apparatus for achieving functions designated in one or more flows of the flowcharts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing devices, so that processing implemented by the computers is generated by executing a series of operation steps on the computers or the other programmable devices, and therefore the instructions executed on the computers or the other programmable devices provide a step of achieving the functions designated in one or more flows of the flowcharts and/or one or more blocks of the block diagrams.

It is to be understood that the terms "system" and "network" in the disclosure are often used interchangeably herein. The term "and/or" in this disclosure describes only an association relationship for describing associated objects and represents that three relationships may exist. For example, A and/or B may represent the following three cases: Only A exists, both A and B exist, and only B exists. In addition, the character "/" in the disclosure generally indicates an "or" relationship between the associated objects.

**Claims**

1.  A method for random access, comprising:

    determining (S201), by a terminal device, a transmission parameter of a random access procedure according to a type of the terminal device and indication information sent by a network device; wherein there is a correspondence between the type of the terminal device and a resource used by the terminal device to send a Message 1, Msg1; wherein the transmission parameter of the random access procedure comprises a transmission parameter of a Message 3, Msg3; and the transmission parameter of the Msg3 comprises an aggregation factor of a Physical Uplink Shared Channel, PUSCH, carrying the Msg3 and a modulation parameter of the Msg3; and wherein the aggregation factor of the PUSCH carrying the Msg3 is: a number of time domain units for sending the Msg3, a time domain unit is a slot, and the modulation parameter of the Msg3 comprises at least one of: a modulation multi-access mode of the Msg3, or a modulation order limit of the Msg3.

2.  The method of claim 1, wherein the resource used by the terminal device to send the Msg1 comprises:
    a reserved resource of a Random Access Channel, RACH, or an RACH resource corresponding to a reserved Random Access Channel Identifier, RACH ID.

3. The method of claim 1 or 2, wherein the indication information is carried in Downlink Control Information, DCI.

4. The method of any one of claims 1-3, wherein the indication information is used for indicating a transmission parameter of a channel after transmitting the indication information during the random access procedure.

5. A terminal device, comprising: a processor (701) and a memory (702) configured to store a computer program runnable on the processor, wherein,
the processor is configured to run the computer program to execute following steps:

determining a transmission parameter of a random access procedure according to a type of the terminal device and indication information sent by a network device; wherein there is a correspondence between the type of the terminal device and a resource used by the terminal device to send a Message 1, Msg1;
wherein the transmission parameter of the random access procedure comprises a transmission parameter of a Message 3, Msg3; and the transmission parameter of the Msg3 comprises an aggregation factor of a Physical Uplink Shared Channel, PUSCH, carrying the Msg3 and a modulation parameter of the Msg3; and wherein the aggregation factor of the PUSCH carrying the Msg3 is: a number of time domain units for sending the Msg3, a time domain unit is a slot, and the modulation parameter of the Msg3 comprises at least one of: a modulation multi-access mode of the Msg3, or a modulation order limit of the Msg3.

6. The terminal device of claim 5, wherein the resource used by the terminal device to send the Msg1 comprises:
a reserved resource of a Random Access Channel, RACH, or an RACH resource corresponding to a reserved Random Access Channel Identifier, RACH ID.

7. The terminal device of claim 5 or 6, wherein the indication information is carried in Downlink Control Information, DCI.

8. The terminal device of any one of claims 5-7, wherein the indication information is used for indicating a transmission parameter of a channel after transmitting the indication information during the random access procedure.

9. A method for random access, comprising:

determining (S201), by a network device, a transmission parameter of a random access procedure according to a type of a terminal device and indication information sent to the terminal device; wherein there is a correspondence between the type of the terminal device and a resource used by the terminal device to send a Message 1, Msg1;
wherein the transmission parameter of the random access procedure comprises a transmission parameter of a Message 3, Msg3; and the transmission parameter of the Msg3 comprises an aggregation factor of a Physical Uplink Shared Channel, PUSCH, carrying the Msg3 and a modulation parameter of the Msg3; and wherein the aggregation factor of the PUSCH carrying the Msg3 is: a number of time domain units for sending the Msg3, a time domain unit is a slot, and the modulation parameter of the Msg3 comprises at least one of: a modulation multi-access mode of the Msg3, or a modulation order limit of the Msg3.

10. The method of claim 9, wherein the resource used by the terminal device to send the Msg1 comprises:
a reserved resource of a Random Access Channel, RACH, or an RACH resource corresponding to a reserved Random Access Channel Identifier, RACH ID.

11. A network device, comprising: a processor (701) and a memory (702) configured to store a computer program runnable on the processor, wherein,
the processor is configured to run the computer program to execute following steps:

determining a transmission parameter of a random access procedure according to a type of a terminal device and indication information sent to the terminal device; wherein there is a correspondence between the type of the terminal device and a resource used by the terminal device to send a Message 1, Msg1;
wherein the transmission parameter of the random access procedure comprises a transmission parameter of a Message 3, Msg3, and a modulation parameter of the Msg3; and the transmission parameter of the Msg3 comprises an aggregation factor of a Physical Uplink Shared Channel, PUSCH, carrying the Msg3; and wherein the aggregation factor of the PUSCH carrying the Msg3 is: a number of time domain units for sending the Msg3, a time domain unit is a slot, and the modulation parameter of the Msg3 comprises at least one of: a modulation multi-access mode of the Msg3, or a modulation order limit of the Msg3.

**12.** The network device of claim 11, wherein the indication information is carried in Downlink Control Information, DCI.

**Patentansprüche**

**1.** Verfahren für einen Direktzugriff, umfassend:

Bestimmen (S201), durch eine Endgerätevorrichtung, eines Übertragungsparameters einer Direktzugriffprozedur gemäß einer Art der Endgerätevorrichtung und Anzeigeinformationen, die von einer Netzwerkvorrichtung gesendet werden; wobei eine Entsprechung zwischen der Art der Endgerätevorrichtung und einer Ressource besteht, die von der Endgerätevorrichtung verwendet wird, um eine Nachricht 1 (Message 1, Msgl) zu senden; wobei der Übertragungsparameter der Direktzugriffprozedur einen Übertragungsparameter einer Nachricht 3 (Message 3, Msg3) umfasst; und der Übertragungsparameter der Msg3 einen Aggregationsfaktor eines gemeinsam genutzten physischen Uplink-Kanals (Physical Uplink Shared Channel, PUSCH), welcher die Msg3 transportiert, und einen Modulationsparameter der Msg3 umfasst; und wobei der Aggregationsfaktor des PUSCH, welcher die Msg3 transportiert, dies ist: eine Anzahl von Zeitdomäneneinheiten zum Senden der Msg3, wobei eine Zeitdomäneneinheit ein Schlitz ist und der Modulationsparameter der Msg3 wenigstens eines hiervon umfasst: einen Modulations-Mehrfachzugriffsmodus der Msg3 oder ein Modulationsordnungslimit der Msg3.

**2.** Verfahren nach Anspruch 1, wobei die Ressource, die von der Endgerätevorrichtung verwendet wird, um die Msg1 zu senden, dies umfasst:
eine reservierte Ressource eines Direktzugriffskanals (Random Access Channel, RACH) oder eine RACH-Ressource, die einer reservierten Direktzugriffskanal-Kennung (Random Access Channel Identifier, RACH ID) entspricht.

**3.** Verfahren nach Anspruch 1 oder 2, wobei die Anzeigeinformationen in Downlink-Steuerinformationen (Downlink Control Information, DCI) transportiert werden.

**4.** Verfahren nach einem der Ansprüche 1-3, wobei die Anzeigeinformationen verwendet werden, um einen Übertragungsparameter eines Kanals nach dem Übertragen der Anzeigeinformationen während der Direktzugriffprozedur anzuzeigen.

**5.** Endgerätevorrichtung, umfassend: einen Prozessor (701) und einen Speicher (702), der dazu ausgelegt ist, ein Computerprogramm zu speichern, das auf dem Prozessor ausgeführt werden kann, wobei
der Prozessor dazu ausgelegt ist, das Computerprogramm auszuführen, um folgende Schritte durchzuführen:

Bestimmen eines Übertragungsparameters einer Direktzugriffprozedur gemäß einer Art der Endgerätevorrichtung und Anzeigeinformationen, die von einer Netzwerkvorrichtung gesendet werden; wobei eine Entsprechung zwischen der Art der Endgerätevorrichtung und einer Ressource besteht, die von der Endgerätevorrichtung verwendet wird, um eine Nachricht 1 (Message 1, Msgl) zu senden; wobei der Übertragungsparameter der Direktzugriffprozedur einen Übertragungsparameter einer Nachricht 3 (Message 3, Msg3) umfasst; und der Übertragungsparameter der Msg3 einen Aggregationsfaktor eines gemeinsam genutzten physischen Uplink-Kanals (Physical Uplink Shared Channel, PUSCH), welcher die Msg3 transportiert, und einen Modulationsparameter der Msg3 umfasst; und wobei der Aggregationsfaktor des PUSCH, welcher die Msg3 transportiert, dies ist: eine Anzahl von Zeitdomäneneinheiten zum Senden der Msg3, wobei eine Zeitdomäneneinheit ein Schlitz ist und der Modulationsparameter der Msg3 wenigstens eines hiervon umfasst: einen Modulations-Mehrfachzugriffsmodus der Msg3 oder ein Modulationsordnungslimit der Msg3.

**6.** Endgerätevorrichtung nach Anspruch 5, wobei die Ressource, die von der Endgerätevorrichtung verwendet wird, um die Msg1 zu senden, dies umfasst:
eine reservierte Ressource eines Direktzugriffskanals (Random Access Channel, RACH) oder eine RACH-Ressource, die einer reservierten Direktzugriffskanal-Kennung (Random Access Channel Identifier, RACH ID) entspricht.

**7.** Endgerätevorrichtung nach Anspruch 5 oder 6, wobei die Anzeigeinformationen in Downlink-Steuerinformationen (Downlink Control Information, DCI) transportiert werden.

**8.** Endgerätevorrichtung nach einem der Ansprüche 5-7, wobei die Anzeigeinformationen verwendet werden, um einen Übertragungsparameter eines Kanals nach dem Übertragen der Anzeigeinformationen während der Direktzugriffprozedur anzuzeigen.

**9.** Verfahren für einen Direktzugriff, umfassend:

Bestimmen (S201), durch eine Netzwerkvorrichtung, eines Übertragungsparameters einer Direktzugriffprozedur gemäß einer Art einer Endgerätevorrichtung und Anzeigeinformationen, die an die Endgerätevorrichtung gesendet werden; wobei eine Entsprechung zwischen der Art der Endgerätevorrichtung und einer Ressource besteht, die von der Endgerätevorrichtung verwendet wird, um eine Nachricht 1 (Message 1, Msgl) zu senden; wobei der Übertragungsparameter der Direktzugriffprozedur einen Übertragungsparameter einer Nachricht 3 (Message 3, Msg3) umfasst; und der Übertragungsparameter der Msg3 einen Aggregationsfaktor eines gemeinsam genutzten physischen Uplink-Kanals (Physical Uplink Shared Channel, PUSCH), welcher die Msg3 transportiert, und einen Modulationsparameter der Msg3 umfasst; und wobei der Aggregationsfaktor des PUSCH, welcher die Msg3 transportiert, dies ist: eine Anzahl von Zeitdomäneneinheiten zum Senden der Msg3, wobei eine Zeitdomäneneinheit ein Schlitz ist und der Modulationsparameter der Msg3 wenigstens eines hiervon umfasst: einen Modulations-Mehrfachzugriffsmodus der Msg3 oder ein Modulationsordnungslimit der Msg3.

**10.** Verfahren nach Anspruch 9, wobei die Ressource, die von der Endgerätevorrichtung verwendet wird, um die Msg1 zu senden, dies umfasst:
eine reservierte Ressource eines Direktzugriffskanals (Random Access Channel, RACH) oder eine RACH-Ressource, die einer reservierten Direktzugriffskanal-Kennung (Random Access Channel Identifier, RACH ID) entspricht.

**11.** Netzwerkvorrichtung, umfassend: einen Prozessor (701) und einen Speicher (702), der dazu ausgelegt ist, ein Computerprogramm zu speichern, das auf dem Prozessor ausgeführt werden kann, wobei,
der Prozessor dazu ausgelegt ist, das Computerprogramm auszuführen, um folgende Schritte durchzuführen:

Bestimmen eines Übertragungsparameters einer Direktzugriffprozedur gemäß einer Art einer Endgerätevorrichtung und Anzeigeinformationen, die an die Endgerätevorrichtung gesendet werden; wobei eine Entsprechung zwischen der Art der Endgerätevorrichtung und einer Ressource besteht, die von der Endgerätevorrichtung verwendet wird, um eine Nachricht 1 (Message 1, Msgl) zu senden; wobei der Übertragungsparameter der Direktzugriffprozedur einen Übertragungsparameter einer Nachricht 3 (Message 3, Msg3) und einen Modulationsparameter der Msg3 umfasst; und der Übertragungsparameter der Msg3 einen Aggregationsfaktor eines gemeinsam genutzten physischen Uplink-Kanals (Physical Uplink Shared Channel, PUSCH), umfasst, welcher die Msg3 transportiert; und wobei der Aggregationsfaktor des PUSCH, welcher die Msg3 transportiert, dies ist: eine Anzahl von Zeitdomäneneinheiten zum Senden der Msg3, wobei eine Zeitdomäneneinheit ein Schlitz ist und der Modulationsparameter der Msg3 wenigstens eines hiervon umfasst: einen Modulations-Mehrfachzugriffsmodus der Msg3 oder ein Modulationsordnungslimit der Msg3.

**12.** Netzwerkvorrichtung nach Anspruch 11, wobei die Anzeigeinformationen in Downlink-Steuerinformationen (Downlink Control Information, DCI) transportiert werden.

**Revendications**

**1.** Procédé d'accès aléatoire, comprenant :

la détermination (S201), par un dispositif terminal, d'un paramètre de transmission d'une procédure d'accès aléatoire selon un type du dispositif terminal et des informations d'indication envoyées par un dispositif de réseau ; une correspondance existant entre le type du dispositif terminal et une ressource utilisée par le dispositif terminal pour envoyer un Message 1, Msg1 ;
le paramètre de transmission de la procédure d'accès aléatoire comprenant un paramètre de transmission d'un Message 3, Msg3 ; et le paramètre de transmission du Msg3 comprenant un facteur d'agrégation d'un canal physique partagé de liaison montante, PUSCH, transportant le Msg3 et un paramètre de modulation du Msg3 ; et le facteur d'agrégation du PUSCH transportant le Msg3 étant : un nombre d'unités de domaine temporel pour l'envoi du Msg3, une unité de domaine temporel étant un créneau temporel, et le paramètre de modulation du Msg3 comprenant au moins un parmi : un mode d'accès multiple de modulation du Msg3, ou une limite d'ordre de modulation du Msg3.

2. Procédé selon la revendication 1, la ressource utilisée par le dispositif terminal pour envoyer le Msg1 comprenant : une ressource réservée d'un canal d'accès aléatoire, RACH, ou une ressource RACH correspondant à un identifiant de canal d'accès aléatoire réservé, RACH ID.

3. Procédé selon la revendication 1 ou 2, les informations d'indication étant transportées dans des informations de commande de liaison descendante, DCI.

4. Procédé selon l'une quelconque des revendications 1 à 3, les informations d'indication étant utilisées pour indiquer un paramètre de transmission d'un canal après la transmission des informations d'indication pendant la procédure d'accès aléatoire.

5. Dispositif terminal, comprenant : un processeur (701) et une mémoire (702) configurée pour stocker un programme informatique exécutable sur le processeur, le processeur étant configuré pour exécuter les étapes suivantes :

la détermination d'un paramètre de transmission d'une procédure d'accès aléatoire selon un type du dispositif terminal et des informations d'indication envoyées par un dispositif de réseau ; une correspondance existant entre le type du dispositif terminal et une ressource utilisée par le dispositif terminal pour envoyer un Message 1, Msg1 ;
le paramètre de transmission de la procédure d'accès aléatoire comprenant un paramètre de transmission d'un Message 3, Msg3 ; et le paramètre de transmission du Msg3 comprenant un facteur d'agrégation d'un canal physique partagé de liaison montante, PUSCH, transportant le Msg3 et un paramètre de modulation du Msg3 ; et le facteur d'agrégation du PUSCH transportant le Msg3 étant : un nombre d'unités de domaine temporel pour l'envoi du Msg3, une unité de domaine temporel étant un créneau temporel, et le paramètre de modulation du Msg3 comprenant au moins un parmi : un mode d'accès multiple de modulation du Msg3, ou une limite d'ordre de modulation du Msg3.

6. Dispositif terminal selon la revendication 5, la ressource utilisée par le dispositif terminal pour envoyer le Msg1 comprenant :
une ressource réservée d'un canal d'accès aléatoire, RACH, ou une ressource RACH correspondant à un identifiant de canal d'accès aléatoire réservé, RACH ID.

7. Dispositif terminal selon la revendication 5 ou 6, les informations d'indication étant transportées dans des informations de commande de liaison descendante, DCI.

8. Dispositif terminal selon l'une quelconque des revendications 5 à 7, les informations d'indication étant utilisées pour indiquer un paramètre de transmission d'un canal après la transmission des informations d'indication pendant la procédure d'accès aléatoire.

9. Procédé d'accès aléatoire, comprenant :

la détermination (S201), par un dispositif de réseau, d'un paramètre de transmission d'une procédure d'accès aléatoire selon un type d'un dispositif terminal et des informations d'indication envoyées au dispositif terminal ; une correspondance existant entre le type du dispositif terminal et une ressource utilisée par le dispositif terminal pour envoyer un Message 1, Msg1 ;
le paramètre de transmission de la procédure d'accès aléatoire comprenant un paramètre de transmission d'un Message 3, Msg3 ; et le paramètre de transmission du Msg3 comprenant un facteur d'agrégation d'un canal physique partagé de liaison montante, PUSCH, transportant le Msg3 et un paramètre de modulation du Msg3 ; et le facteur d'agrégation du PUSCH transportant le Msg3 étant : un nombre d'unités de domaine temporel pour l'envoi du Msg3, une unité de domaine temporel étant un créneau temporel, et le paramètre de modulation du Msg3 comprenant au moins un parmi : un mode d'accès multiple de modulation du Msg3, ou une limite d'ordre de modulation du Msg3.

10. Procédé selon la revendication 9, la ressource utilisée par le dispositif terminal pour envoyer le Msg1 comprenant : une ressource réservée d'un canal d'accès aléatoire, RACH, ou une ressource RACH correspondant à un identifiant de canal d'accès aléatoire réservé, RACH ID.

**11.** Dispositif de réseau, comprenant : un processeur (701) et une mémoire (702) configurée pour stocker un programme informatique exécutable sur le processeur,
le processeur étant configuré pour exécuter le programme informatique afin de réaliser les étapes suivantes :

la détermination d'un paramètre de transmission d'une procédure d'accès aléatoire selon un type d'un dispositif terminal et des informations d'indication envoyées au dispositif terminal ; une correspondance existant entre le type du dispositif terminal et une ressource utilisée par le dispositif terminal pour envoyer un Message 1, Msg1 ; le paramètre de transmission de la procédure d'accès aléatoire comprenant un paramètre de transmission d'un Message 3, Msg3 ; et un paramètre de modulation du Msg3 ; et le paramètre de transmission du Msg3 comprenant un facteur d'agrégation d'un canal physique partagé de liaison montante, PUSCH, transportant le Msg3 ; et le facteur d'agrégation du PUSCH transportant le Msg3 étant : un nombre d'unités de domaine temporel pour l'envoi du Msg3, une unité de domaine temporel étant un créneau temporel, et le paramètre de modulation du Msg3 comprenant au moins un parmi : un mode d'accès multiple de modulation du Msg3, ou une limite d'ordre de modulation du Msg3.

**12.** Dispositif de réseau selon la revendication 11, les informations d'indication étant transportées dans des informations de commande de liaison descendante, DCI.

**FIG. 1**

**FIG. 2**

**100**

110

120          120

**FIG. 3**

A communication device determines a transmission parameter of a random access procedure according to at least one of: the type of a terminal device, or indication information sent by a network device

S201

**FIG. 4**

Uplink
Msg1

Msg2

Uplink
Msg3

Msg4

Msg4 associated
PUCCH feedback

Slot

1    2

1    2    3    4

Control channel
monitored by
terminal device
(PUCCH)

data scheduled by
control channel
received by terminal
device (PDSCH)

Scheduling
relationship

**FIG. 5**

Communication device300

Processing unit
301

**FIG. 6**

Communication device _700

Processor _701

_702
Memory

705

Application
program _7022

_704
Network
interface

**FIG. 7**

**EP 4 236 576 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERICSSON**. Potential UE complexity reduction features for RedCap. *3GPP DRAFT R1-2008837*

- 3rd Generation Partnership Project; Technical Specification Group Radio Access Network; Study on support of reduced capability NR devices (Release 17). *3GPP DRAFT R1-2009816*